# EUROPEAN PATENT APPLICATION

(11) **EP 4 439 392 A1**
(43) Date of publication of application: **02.10.2024**
(21) Application number: 22914774.9
(22) Date of filing: 27.12.2022
(51) Int. Cl.: G06N 3/08

(54) **METHOD AND APPARATUS FOR TRAINING DEEP LEARNING MODEL, AND RELATED DEVICE**

(30) Priority: 29.12.2021 CN 202111643825
(71) Applicant: Huawei Technologies Co., Ltd., Shenzhen, Guangdong 518129 (CN)
(72) Inventor: BAO, Xiang, Shenzhen, Guangdong 518129 (CN); MA, Jingting, Shenzhen, Guangdong 518129 (CN); FU, Shuo, Shenzhen, Guangdong 518129 (CN); NING, Zhenjiang, Shenzhen, Guangdong 518129 (CN)
(74) Representative: Körber, Martin Hans
(86) International application number: PCT/CN2022/142285
(87) International publication number: WO 2023/125521

(57) **Abstract**

This application discloses a deep learning model training method. A deep learning model includes a plurality of layers, and each layer includes at least one parameter. After reverse calculation is performed at a first training phase of the deep learning model, a first parameter of a first layer of the plurality of layers is adjusted. Specifically, a first adjustment value of the first parameter is determined, and whether the first adjustment value exceeds an adjustment upper limit is determined. When the adjustment upper limit is exceeded, the first adjustment value is modified to a second adjustment value, and the second adjustment value is less than or equal to the adjustment upper limit, so that the first parameter is adjusted based on the second adjustment value. In this way, an adjustment value of a parameter can be limited within a stable range in each round of iteration. Therefore, even if a hyper-parameter is not appropriately set, the deep learning model can converge because of a stable change of the parameter value. This can reduce training costs of the deep learning model, and improve training efficiency. In addition, this application further provides a corresponding apparatus and a related device.

## Description

This application claims priority to Chinese Patent Application No. 202111643825.1, filed with the China National Intellectual Property Administration on December 29, 2021 and entitled "DEEP LEARNING MODEL TRAINING METHOD AND APPARATUS, AND RELATED DEVICE", which is incorporated herein by reference in its entirety.

### TECHNICAL FIELD

This application relates to the field of artificial intelligence technologies, and in particular, to a deep learning model training method and apparatus, and a related device.

### BACKGROUND

Currently, a deep learning (deep learning) technology is one of mainstream research directions in the field of artificial intelligence (artificial intelligence, AI), and is widely applied in various scenarios such as computer vision, natural language processing, data search, and information recommendation. Generally, a deep learning model constructed based on a deep learning algorithm can output an expected result.

Over iterative training of the deep learning model, for each iteration, after forward calculation is performed on the deep learning model, a parameter of each layer in the deep learning model needs to be adjusted through backward calculation based on a loss value determined through the forward calculation, to improve precision of the deep learning model. In a current deep learning model, an adjustment value of each parameter is determined based on the loss value and a hyper-parameter corresponding to each parameter. If the hyper-parameter is set inaccurately, a convergence speed and final convergence precision of the deep learning model are affected.

Based on this, for different scenarios, different deep learning models, and even different training data, when the deep learning model is trained, a large amount of time and costs are usually spent to find an appropriate hyper-parameter for an optimizer, to ensure a training effect of the deep learning model. This increases training costs of the deep learning model, and reduces training efficiency of the deep learning model.

### SUMMARY

Embodiments of this application provide a deep learning model training method and apparatus, and a related device, to reduce training costs of a deep learning model and improve training efficiency.

According to a first aspect, an embodiment of this application provides a deep learning model training method. A deep learning model includes a plurality of (network) layers, and each layer includes at least one parameter such as a weight value. In a process of training the deep learning model, after reverse calculation is performed at a first training phase of the deep learning model, a first parameter of a first layer of the plurality of layers is adjusted, where the first layer is one of the plurality of layers, and the plurality of first parameters are one of the at least one parameter. When the first parameter is specifically adjusted, a first adjustment value of the first parameter is determined, and whether the first adjustment value exceeds an adjustment upper limit of the first parameter is further determined. When the first adjustment value exceeds the adjustment upper limit of the first parameter, the first adjustment value is modified to a second adjustment value, and the second adjustment value is less than or equal to the adjustment upper limit, so that the first parameter can be adjusted based on the second adjustment value, for example, a sum of the second adjustment value and a value of the first parameter before adjustment is used as a value of the first parameter after adjustment.

In a process of training the deep learning model, an adjustment value of a parameter in the deep learning model is limited. Therefore, regardless of whether a hyper-parameter corresponding to the deep learning model is appropriately set, in each round of iterative update of a parameter value of the parameter, the adjustment value (which may also be referred to as a parameter update amount) of the parameter may be limited within a stable range. Therefore, even if the hyper-parameter is not appropriately set, the deep learning model can converge because of a stable change of the parameter value. In this way, when the deep learning model is trained, a large amount of time and costs may not need to be spent to find an appropriate hyper-parameter for an optimizer, and retraining of the deep learning model because of adjustment of the hyper-parameter can also be avoided as much as possible. This can reduce training costs of the deep learning model, and improve training efficiency of the deep learning model.

In a possible implementation, in the process of training the deep learning model, the adjustment upper limit of the first parameter may be adjusted based on the second adjustment value. For example, the adjustment upper limit of the first parameter may be reduced based on the second adjustment value. In this way, the adjustment upper limit can be dynamically updated, to improve reliability of the adjustment upper limit.

In a possible implementation, before the first training phase of the deep learning model, the deep learning model further has a second training phase. In addition, at the second training phase, a loss value corresponding to the first parameter may be determined based on a result of forward calculation of the deep learning model. For example, the loss value may be first calculated based on a result obtained through the forward calculation and an actual result, and then a third adjustment value is determined based on the loss value corresponding to the first parameter and the hyper-parameter corresponding to the deep learning model. In addition, after the deep learning model is trained for N times (N is a positive integer greater than 1), N third adjustment values may be obtained, so that the adjustment upper limit may be determined based on the N third adjustment values. In this way, the adjustment value at the first training phase may be constrained based on the adjustment value at the second training phase of the deep learning model, to implement convergence of the deep learning model and improve training efficiency of the model.

For example, an average value of the N third adjustment values may be calculated, and the average value is used as the adjustment upper limit. Alternatively, a third adjustment value with a largest magnitude may be obtained by traversing the plurality of third adjustment values, and the third adjustment value is determined as the adjustment upper limit. Alternatively, the adjustment upper limit may be calculated based on the N third adjustment values by using an exponential moving average algorithm.

In a possible implementation, a hyper-parameter at the first training phase is greater than a hyper-parameter at the second training phase. For example, when the deep learning model is trained according to a warmup policy, a learning rate at the first training phase may be greater than a learning rate at the second training phase, and the second training phase may be, for example, a model training phase within a preset quantity of times (for example, 200 times) of training that is just started in deep learning model training.

In a possible implementation, the adjustment upper limit is a preset value. For example, an adjustment upper limit used in a training process of another deep learning model may be used as the adjustment upper limit that needs to be used when the deep learning model is trained in this embodiment. In this way, resources and costs that need to be spent in determining the adjustment upper limit can be reduced.

In a possible implementation, the deep learning model may be trained based on a chip of a first type. When obtaining the adjustment upper limit, an adjustment upper limit corresponding to the chip of the first type may be found from adjustment upper limits respectively corresponding to chips of a plurality of types of included in a cloud database. In this way, an adjustment upper limit corresponding to a type of a chip may be determined based on the type of the chip for training the deep learning model, so that the adjustment upper limit matches hardware resources.

In a possible implementation, modifying the first adjustment value to the second adjustment value may specifically be multiplying the first adjustment value by a modification value to obtain the second adjustment value. For example, a value range of the modification value may be (0, 1) or the like, to reduce the first adjustment value, so that the first adjustment value after adjustment exceeds the adjustment upper limit.

In an example, the modification value may specifically be a ratio of norms respectively corresponding to the adjustment upper limit and the first adjustment value. Therefore, when modifying the first adjustment value, the norms respectively corresponding to the adjustment upper limit and the first adjustment value may be first calculated, and the ratio of the two norms is further calculated, so that a product of the first adjustment value and the ratio of the two norms may be used as the second adjustment value (that is, the first adjustment value after modification).

In a possible implementation, the first adjustment value is determined based on the loss value obtained through the forward calculation of the deep learning model and the hyper-parameter corresponding to the deep learning model. For example, after the loss value is calculated based on an inference result of the deep learning model and an actual result, a change gradient of each layer in the deep learning model may be calculated based on the loss value by using a backpropagation algorithm, so that a product of the change gradient of each layer and the hyper-parameter (for example, the learning rate) corresponding to the deep learning model may be calculated, to obtain the first adjustment value corresponding to the parameter at each layer. In this way, at the first training phase, after the deep learning model is trained for a plurality of times, when a proportion of a quantity of times that the first adjustment value exceeds the adjustment upper limit to a total quantity of training times exceeds a preset value, alarm information is generated, to prompt, by using the alarm information, a user that the set hyper-parameter is not appropriate for the deep learning model.

In actual application, the alarm information may alternatively be determined and generated based on another implementation. For example, when a quantity of times that the first adjustment value of the first parameter continuously exceeds the adjustment upper limit is greater than a preset threshold of times, it may be determined to generate the alarm information to provide an alarm about the hyper-parameter.

According to a second aspect, based on a same inventive concept as the method embodiment of the first aspect, an embodiment of this application provides a deep learning model training apparatus. The apparatus has corresponding functions for implementing the implementations of the first aspect. The function may be implemented by hardware, or may be implemented by hardware executing corresponding software. The hardware or the software includes one or more modules corresponding to the foregoing functions.

According to a third aspect, an embodiment of this application provides a computing device, including a processor and a memory. The memory is configured to store instructions, and when the computing device runs, the processor executes the instructions stored in the memory, to enable the computing device to perform the deep learning model training method according to any one of the first aspect or the implementations of the first aspect. It should be noted that the memory may be integrated into the processor, or may be independent of the processor. The apparatus may further include a bus. The processor is connected to the memory through the bus. The memory may include a readable memory and a random access memory.

According to a fourth aspect, an embodiment of this application further provides a readable storage medium. The readable storage medium stores a program or instructions, and when the program or the instructions is/are run on a computer, the deep learning model training method according to any one of the first aspect or the implementations of the first aspect is performed.

According to a fifth aspect, an embodiment of this application further provides a computer program product including instructions. When the computer program product runs on a computer, the computer is enabled to perform the deep learning model training method according to any one of the first aspect or the implementations of the first aspect.

In addition, for technical effects brought by any one of the implementations of the second aspect to the sixth aspect, refer to technical effects brought by different implementations of the first aspect, or refer to technical effects brought by different implementations of the second aspect. Details are not described herein again.

### BRIEF DESCRIPTION OF DRAWINGS

To describe the technical solutions in embodiments of this application more clearly, the following briefly describes the accompanying drawings used in describing embodiments. It is clear that the accompanying drawings in the following description show merely some embodiments of this application, and a person of ordinary skill in the art may still derive other drawings from these accompanying drawings.
FIG. 1 is a diagram of a structure of an example deep learning model training system according to an embodiment of this application;
FIG. 2 is a diagram of a training process for a deep learning model according to an embodiment of this application;
FIG. 3 is a schematic flowchart of a deep learning model training method according to an embodiment of this application;
FIG. 4 shows diagrams of values of an adjustment upper limit of a first parameter in a deep learning model training process;
FIG. 5 is a diagram of comparison between model training precision when an adjustment value is limited and model training precision when the adjustment value is not limited in a case of abnormal hyper-parameter setting;
FIG. 6 is a diagram of an example application scenario;
FIG. 7 is a diagram of a structure of a deep learning model training apparatus according to an embodiment of this application; and
FIG. 8 is a diagram of a hardware structure of a computing device according to an embodiment of this application.

### DESCRIPTION OF EMBODIMENTS

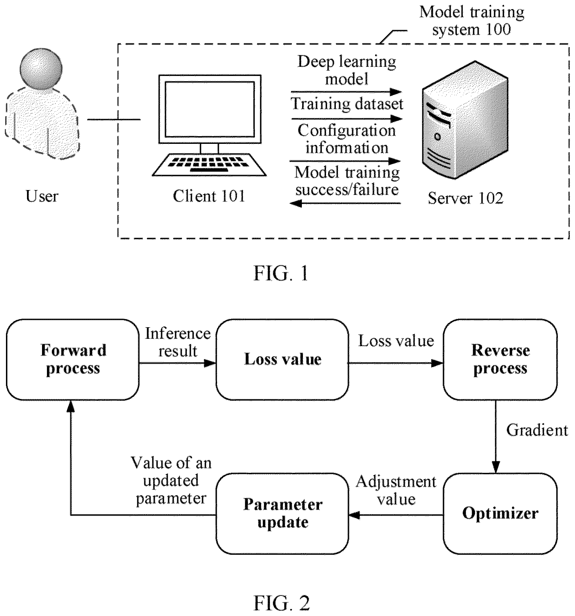

FIG. 1 is a diagram of a structure of an example deep learning model training system. As shown in FIG. 1, the deep learning model training system 100 may include a client 101 and a server 102. In addition, data exchange may be performed between the client 101 and the server 102, for example, data communication may be performed by using a hypertext transfer protocol (Hypertext Transfer Protocol, HTTP).

The client 101 may be configured to perform human-machine interaction with a user, for example, receive a to-be-trained deep learning model, a training dataset, configuration information for the deep learning model (for example, a termination condition and a hyper-parameter for configuring model training), and the like that are provided by the user, and provide the data to the server 102. The server 102 may perform corresponding configuration on the deep learning model based on the configuration information sent by the client 101, and perform iterative training on the deep learning model by using the training dataset. The deep learning model includes a plurality of layers, and each layer includes at least one parameter. When iterative training is performed on the deep learning model, an iterative update is performed on the parameter at each layer in the deep learning model. Further, after completing training of the deep learning model, the server 102 may further feed back a model training success/failure notification to the client 101.

For example, a process of training the deep learning model by the server 102 may be shown in FIG. 2. Over each round of iterative training, the server 102 may input a group of sample data into the deep learning model, and the deep learning model outputs an inference result for the sample data (the process is a forward process). Then, the server 102 may calculate a loss value between the inference result output by the deep learning model and an actual result of the group of sample data by using a corresponding loss function. Then, the server 102 may calculate a change gradient of the parameter in each network layer in the deep learning model based on the calculated loss value (the process is a reverse process). In this way, the server 102 may calculate an adjustment value (which may also be referred to as a parameter update amount) of the parameter over the round of iterative training based on a hyper-parameter preset in an optimizer and the change gradient of the parameter at each network layer. The adjustment value may be, for example, a product of the change gradient and the hyper-parameter (for example, a learning rate) and the like, so that the server 102 can update a parameter value of the parameter based on the calculated adjustment value of each parameter.

It should be noted that, if the hyper-parameter in the optimizer is not appropriately set, the adjustment value of each parameter over each round of iterative training may fluctuate greatly. Consequently, the deep learning model cannot converge because the parameter in the deep learning model changes unstably, and a training effect of the deep learning model is affected. Therefore, before training the deep learning model, an additional calculation process usually needs to be performed, and a large amount of time is spent to find an appropriate hyper-parameter for the optimizer. This increases training costs of the deep learning model, and reduces training efficiency of the deep learning model.

Based on this, embodiments of this application provide a model training method, to reduce costs required for training the deep learning model and improve training efficiency. After performing reverse calculation at a first training phase of the deep learning model, the server 102 adjusts a first parameter of a first layer of the plurality of layers. The first layer is one of the plurality of layers included in the deep learning model, and the first parameter is one of at least one parameter included in the first layer. During specific adjustment, the server 102 first determines a first adjustment value of the first parameter, and determines whether the first adjustment value exceeds an adjustment upper limit of the first parameter. When the first adjustment value exceeds the adjustment upper limit of the first parameter, the server 102 modifies the first adjustment value to a second adjustment value, and the second adjustment value is less than or equal to the adjustment upper limit, so that the server 102 adjusts the first parameter based on the second adjustment value. Over each round of iterative training, the server 102 may limit the adjustment value of the parameter in the deep learning model and update the parameter with reference to the foregoing process.

In a process of training the deep learning model, the server 102 may limit the adjustment value of the parameter in the deep learning model not to exceed the adjustment upper limit. Therefore, regardless of whether the hyper-parameter in the optimizer is appropriately set, in each round of iterative update of the parameter value of the parameter, the adjustment value of the parameter may be limited within a stable range. Therefore, even if the hyper-parameter in the optimizer is not appropriately set, the deep learning model can converge because of a stable change of the parameter value. In this way, when training the deep learning model, the server 102 may not need to spend a large amount of time and costs to find an appropriate hyper-parameter for the optimizer, and retraining of the deep learning model because of adjustment of the hyper-parameter can be avoided as much as possible. This can reduce training costs of the deep learning model, and improve training efficiency of the deep learning model.

It should be noted that the system architecture shown in FIG. 1 is merely used as an example, and is not intended to limit specific implementation of the system architecture to the example. For example, in another possible system architecture, the deep learning model training system 100 may not include the client 101, and the server 102 directly obtains the deep learning model from a network and automatically performs the training process. Alternatively, the deep learning model training system 100 may be deployed on a computing device of another type such as a local terminal or a processor, not limited to the foregoing server. This is not limited in embodiments.

To make the foregoing objectives, features, and advantages of this application clearer and easier to understand, the following describes various non-limiting implementations in embodiments of this application by using examples with reference to the accompanying drawings. Apparently, the described embodiments are some but not all of embodiments of this application. All other embodiments obtained by a person of ordinary skill in the art based on embodiments of this application without creative efforts shall fall within the protection scope of this application.

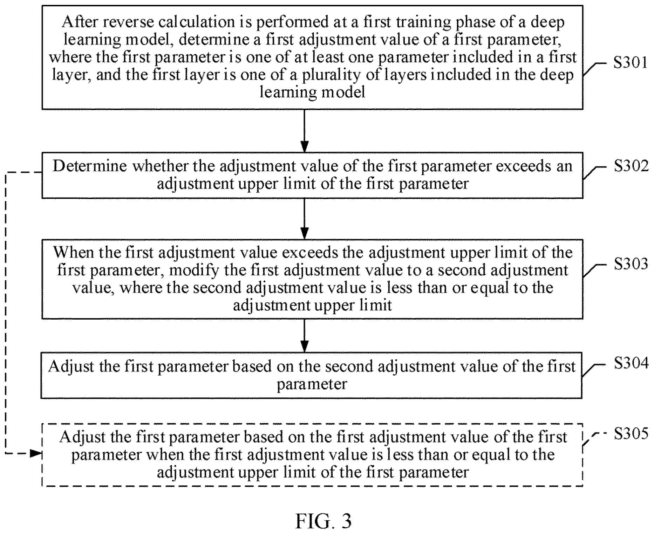

FIG. 3 is a schematic flowchart of a deep learning model training method according to an embodiment of this application. The method may be applied to the deep learning model training system 100 shown in FIG. 1, and may be performed by the server 102 in the deep learning model training system 100. In actual application, the method may alternatively be applied to another applicable model training system. For ease of understanding and description, the following uses an example in which the server 102 in the deep learning model training system 100 performs the method for description. The method may specifically include the following steps.

S301: After reverse calculation is performed at a first training phase of a deep learning model, determine a first adjustment value of a first parameter, where the first parameter is one of at least one parameter included in a first layer, and the first layer is one of a plurality of layers included in the deep learning model.

In this embodiment, the deep learning model is a model constructed based on a deep learning algorithm, and may usually include a plurality of layers of network structures. Each layer of network structure includes at least one parameter, and a value of the parameter in each layer of network structure may be updated in a manner of iterative training. For example, the deep learning model may be used for image classification, target detection, voice recognition, and the like. This is not limited in this embodiment. In addition, the deep learning model may be a newly constructed model, and the server 102 may initialize the deep learning model, including initializing the network structure and the parameter in the deep learning model. Alternatively, the deep learning model may be a model that needs to be migrated. For example, after the model is migrated from a scenario A to a scenario B, the server 102 may retrain/incrementally train the model based on training data in the scenario B, so that the model can adapt to a data feature in the scenario B.

Generally, the server 102 may perform a plurality of rounds of iterative training on the deep learning model by using at least one group of sample data, and a quantity of iterative training times of the deep learning model may be preset. In addition, over each round of iterative training, the server 102 may update parameter values of a plurality of parameters in the deep learning model (for example, update weight values at layers of network structures of the deep learning model) based on a difference between a result output by the deep learning model and an actual result (carried in sample data). For ease of understanding and description, in this embodiment, an example in which the server 102 adjusts a parameter value of one parameter (referred to as the first parameter below) is used for description. In addition, an implementation in which the server 102 adjusts a value of another parameter is similar to and may be understood with reference to the implementation in which the value of the first parameter is adjusted.

Over each round of iterative training, the server 102 may calculate the first adjustment value of the first parameter by using an optimizer corresponding to the deep learning model. The optimizer may be, for example, a stochastic gradient descent (stochastic gradient descent, SGD) or Adam, or certainly, may be another applicable optimizer, and a hyper-parameter may be configured in the optimizer. Specifically, over one round of iterative training, after a change gradient corresponding to each layer is reversely calculated by using a manner such as a back propagation algorithm, the optimizer may calculate a product of the change gradient and the hyper-parameter based on the change gradient and the hyper-parameter configured in the optimizer, such as a learning rate (learning rate), a loss scale (loss scale), or the like, and use the product as the first adjustment value of the first parameter. In actual application, if the hyper-parameter in the optimizer is not appropriately set, over each round of iterative training, the first adjustment value of the first parameter that is calculated by the optimizer based on the hyper-parameter may be excessively large. Consequently, it is easy to cause the deep learning model finally obtained through training to be difficult to converge, and a training effect of the deep learning model is affected. Therefore, in this embodiment, over iterative training of the deep learning model, the server 102 may limit the first adjustment value of the first parameter by using an adjustment upper limit corresponding to the first parameter, to avoid large fluctuation of the adjustment value of the first parameter over each round of iterative training. Therefore, the server 102 may continue to perform the following step S302.

S302: Determine whether the adjustment value of the first parameter exceeds the adjustment upper limit of the first parameter.

The adjustment upper limit of the first parameter is a maximum value the first parameter is allowed to be adjusted by over one round of iterative training. In a possible implementation, the server 102 may determine the adjustment upper limit of the first parameter based on an adjustment value of the first parameter over a plurality of rounds of iterative training at a second training phase of the deep learning model. Before entering the first training phase for model training, the deep learning model may enter the second training phase in advance to complete training.

Specifically, when training the deep learning model by using a training sample, the server 102 may perform statistics collection on a plurality of adjustment values (referred to as third adjustment values below for ease of differentiation) of the first parameter in the second training phase. Each third adjustment value is an adjustment value of the first parameter over one round of iterative training included in the second training phase of the deep learning model. For example, the server 102 may perform statistics collection on adjustment values of the first parameter over the first 200 rounds of iterative training of the deep learning model, to obtain 200 third adjustment values. For example, over one round of iterative training, the server 102 may determine, based on a result of forward calculation of the deep learning model, a loss value corresponding to the first parameter. Specifically, the server 102 may calculate the loss value of the first parameter based on the result of the forward calculation (that is, a result output by the deep learning model) and an actual result in training data. Then, the server 102 may determine, based on the loss value corresponding to the first parameter and the hyper-parameter corresponding to the deep learning model, the third adjustment value corresponding to the first parameter. For example, the server 102 may calculate a change gradient based on the loss value corresponding to the first parameter, and then use a product of the change gradient and the hyper-parameter as the third adjustment value corresponding to the first parameter. In this way, the server 102 may obtain, in the foregoing similar manner, N third adjustment values (N is a positive integer greater than 1) corresponding to the first parameter respectively over N rounds of iterative training.

It should be noted that after the second training phase ends, the server 102 at least has the first training phase. In addition, in an example, a hyper-parameter (for example, a learning rate) of the deep learning model at the second training phase is less than a hyper-parameter of the deep learning model at the first training phase. For example, the server 102 may train the deep learning model according to a warmup policy. To be specific, when starting training, the server 102 may train the deep learning model based on a low learning rate, to enable a network in the deep learning model to be familiar with training data. In addition, as the training is iterated, the learning rate of the deep learning model may gradually increase to a preset fixed value (for example, a value of the learning rate that is preconfigured by a user). In this case, the foregoing first training phase may be a time period from a moment at which the deep learning model starts to be trained to a moment at which the learning rate reaches the fixed value, and the second training phase may be a time period in which the deep learning model is trained with the learning rate being the fixed value. Therefore, before the learning rate of the deep learning model is less than the fixed value, the server 102 may obtain third adjustment values of the first parameter over a plurality of rounds of iterative training.

After obtaining the N third adjustment values, the server 102 may obtain the adjustment upper limit of the first parameter through calculation based on the N third adjustment values. For example, the server 102 may calculate an average value of the N third adjustment values, and use the average value as the adjustment upper limit. Alternatively, the server 102 may traverse the N third adjustment values to obtain a third adjustment value with a largest magnitude, and determine the third adjustment value as the adjustment upper limit. Alternatively, the server 102 may calculate the adjustment upper limit based on the third adjustment value by using an exponential moving average (exponential moving average, EMA) algorithm, or the like. This is not limited in this embodiment.

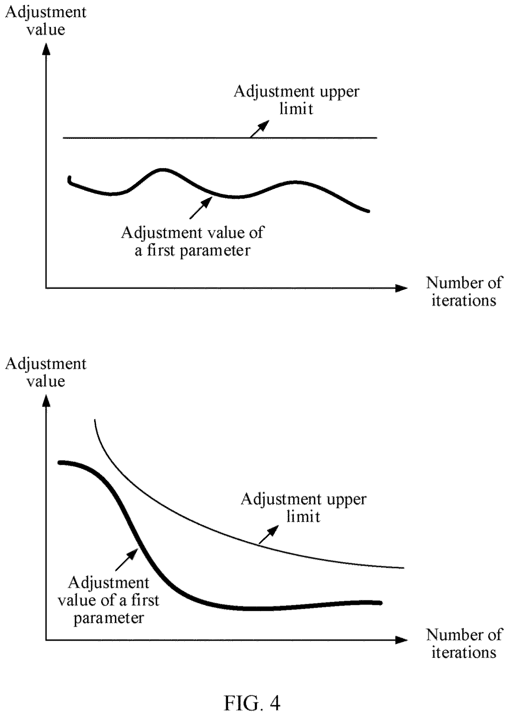

After calculating the adjustment upper limit, the server 102 may limit the first adjustment value of the first parameter in each round of iteration at the first training phase by using the adjustment upper limit, to avoid updating the first parameter based on an excessively large first adjustment value. At the first training phase, the adjustment upper limit of the first parameter is a fixed value, as shown as an upper part in FIG. 4. For example, before iterative training of the deep learning model, the adjustment upper limit of the first parameter may have been configured in an optimizer used for training the deep learning model. For example, for some mainstream deep learning models, an adjustment upper limit of each parameter may be determined in manners such as data statistics collection or manual setting based on experience, and the adjustment upper limit is configured in the optimizer, so that the server 102 obtains the adjustment upper limit of the first parameter from the optimizer when starting iterative training of the deep learning model. Correspondingly, over iterative training at the second training phase, the server 102 may limit an adjustment value of the first parameter based on the adjustment upper limit.

Alternatively, the adjustment upper limit of the first parameter may dynamically change. For example, the server 102 may update the adjustment upper limit with reference to the adjustment upper limit and a quantity of iteration times of the deep learning model. For example, in an actual application scenario, it is usually expected that with iterative training of the deep learning model, a value of each parameter in the deep learning model tends to be more stable, that is, an adjustment value of each parameter is smaller during iterative training at the first training phase. Therefore, the server 102 may gradually limit the adjustment upper limit of the first parameter based on the quantity of iteration times of the deep learning model, to limit, by using the gradually limited adjustment upper limit, the first adjustment value of the first parameter to fluctuate within a gradually decreasing range. For example, the server 102 may perform relaxation processing on the adjustment upper limit based on the quantity of iteration times, for example, calculate an adjustment upper limit corresponding to the first parameter in each round of iterative training by using a successive over relaxation (successive over relaxation, SOR) iteration method, and update the adjustment upper limit to the newly calculated adjustment upper limit. As the quantity of iteration times increases, the adjustment upper limit calculated by the server 102 gradually decreases, as shown as a lower part in FIG. 4.

S303: When the first adjustment value exceeds the adjustment upper limit of the first parameter, modify the first adjustment value to a second adjustment value, where the second adjustment value is less than or equal to the adjustment upper limit.

It may be understood that, if the hyper-parameter in the optimizer is not appropriately set, for example, the learning rate in the optimizer is set excessively large, the first adjustment value of the first parameter that is calculated by the server 102 based on the hyper-parameter may be excessively large, and convergence of the deep learning model is affected. In this case, the server 102 may determine whether the first adjustment value of the first parameter exceeds the obtained adjustment upper limit. In addition, when the first adjustment value of the first parameter exceeds the adjustment upper limit, it indicates that the first adjustment value calculated through the round of iterative training exceeds an adjustment value range that can enable the deep learning model to converge, so that the server 102 can decrease the first adjustment value of the first parameter, to limit the first adjustment value of the first parameter to a range that does not exceed the adjustment upper limit. In this way, even if the hyper-parameter in the optimizer is not appropriately set, sharp fluctuation of the first parameter during an iterative update is avoided by limiting the first adjustment value to a stable range by the server 102, to avoid a case in which the deep learning model cannot converge.

In an implementation example of modifying the first adjustment value, because the first adjustment value of the first parameter that is calculated by the optimizer may be a vector expressed using a matrix, the server 102 may calculate a norm value corresponding to the adjustment upper limit and a norm value corresponding to the first adjustment value of the first parameter, and further calculate a ratio (the ratio is less than 1) between the two norm values, so that the server 102 can use the ratio as a modification value to modify the first adjustment value of the first parameter, to obtain the second adjustment value. For example, a product of the first adjustment value and the modification value is used as the second adjustment value. In an implementation example, the server 102 may perform an operation of multiplying a value of each element in the matrix corresponding to the adjustment value of the first parameter by the ratio, and use a new matrix obtained through calculation as the second adjustment value, to implement modification of the adjustment value of the first parameter. In this way, a norm value corresponding to the second adjustment value of the first parameter is less than or equal to the norm value corresponding to the adjustment upper limit.

Alternatively, in another implementation example, when the first adjustment value of the first parameter exceeds the adjustment upper limit, the server 102 may select an adjustment value from a range that does not exceed the adjustment upper limit as the second adjustment value of the first parameter over the round of iteration. In this embodiment, a specific implementation of modifying the first adjustment value of the first parameter to the range that does not exceed the adjustment upper limit is not limited.

When the first adjustment value of the first parameter does not exceed the adjustment upper limit, it indicates that the first adjustment value calculated in the round of iterative training may generally not affect convergence of the deep learning model. In this case, the server 102 may not need to adjust the first adjustment value of the first parameter.

S304: Adjust the first parameter based on the second adjustment value of the first parameter.

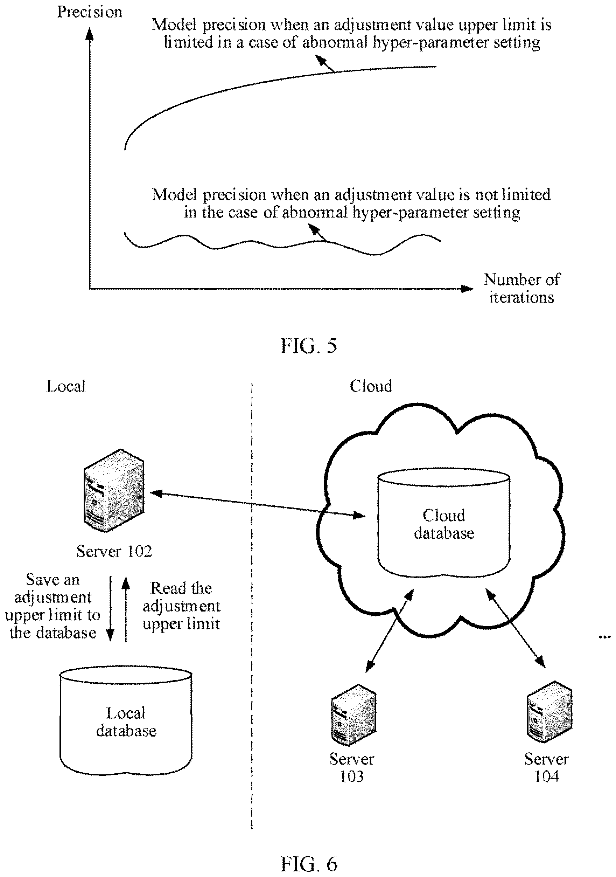

In specific implementation, after modifying the adjustment value of the first parameter, the server 102 may calculate a sum of the second adjustment value of the first parameter and a value of the first parameter, to obtain a value of the first parameter after the current round of iteration update, to implement an update of the first parameter. Because the adjustment value of the first parameter is limited within a stable change range, the value of the first parameter may tend to be in a stable change state over each round of iterative training. In this way, when the hyper-parameter in the optimizer is not appropriately set, the deep learning model can still meet a convergence condition. In addition, in a process of determining a target adjustment value upper limit by the server 102, an amount of additional calculation introduced and an amount of time spent are both small. Therefore, an original training process for the deep learning model is slightly affected, and overall training duration and training costs of the deep learning model are almost not increased. In addition, in actual application, when the hyper-parameter in the optimizer is not appropriately set, an adjustment value of each parameter over each round of iteration is limited, so that a deep learning model finally obtained through training can generally reach state of the art (state of the art, SOTA) precision. In this way, when the hyper-parameter in the optimizer is not appropriately set, training precision of the deep learning model can be effectively improved, as shown in FIG. 5.

Correspondingly, if the first adjustment value of the first parameter does not exceed the target adjustment value upper limit, the server 102 may perform step S304.

S305: Adjust the first parameter based on the first adjustment value of the first parameter when the first adjustment value is less than or equal to the adjustment upper limit of the first parameter.

In this way, an iterative update of the value of the first parameter may be implemented. A specific implementation is similar to an implementation in which the value of the first parameter is updated by using the second adjustment value. For details, refer to the foregoing related descriptions. Details are not described herein again.

Further, when the adjustment value of the first parameter does not exceed the adjustment upper limit, the server 102 may further dynamically update the adjustment upper limit of the first parameter based on the first adjustment value of the first parameter, to improve reliability of the adjustment upper limit. Specifically, the server 102 may calculate a new adjustment upper limit by using an EMA algorithm (or another statistics collection manner) based on the first adjustment value of the first parameter that is calculated by the optimizer over the current round of iterative training and first adjustment values of the first parameter over a plurality of rounds of iterative training before the current round of iteration (including the first adjustment value that does not exceed the adjustment upper limit and the second adjustment value obtained through modification after the adjustment upper limit is exceeded), so that the server 102 can limit and modify, based on the new adjustment upper limit over a next round of iterative training of the deep learning model, a new first adjustment value of the first parameter that is calculated by the optimizer. Certainly, when the adjustment value of the first parameter exceeds the adjustment upper limit, the server 102 may also dynamically update the adjustment upper limit of the first parameter based on the second adjustment value of the first parameter. A specific implementation is similar to an implementation in which the adjustment upper limit is updated by using the first adjustment value. For details, refer to the foregoing related descriptions. Details are not described herein again.

In actual application, when the hyper-parameter in the optimizer is appropriately set, over iterative training of the deep learning model by the server 102, the adjustment value of the first parameter that is calculated by the optimizer gradually tend to be stable, that is, a quantity of times that the adjustment value of the first parameter exceeds the adjustment upper limit is small. When the hyper-parameter in the optimizer is not appropriately set, over iterative training of the deep learning model by the server 102, the adjustment value of the first parameter that is calculated by the optimizer may frequently exceed the adjustment upper limit. Based on this, in a further possible implementation, at the first training phase of the deep learning model, the server 102 may further perform statistics collection on first adjustment values of the first parameter that are separately calculated by the optimizer over the plurality of rounds of iterative training, and determine whether the plurality of first adjustment values meet a preset condition. If the plurality of first adjustment values meet the preset condition, the server 102 may generate alarm information, and send an alarm to the client 101 for presentation, so that the alarm information presented by the client 101 reminds the user that the hyper-parameter in the optimizer is abnormal. In this way, the user may determine whether to continue training the deep learning model based on the abnormally set hyper-parameter, or reset the hyper-parameter in the optimizer and train the deep learning model.

For example, the preset condition that the plurality of first adjustment values of the first parameter meet may be, for example, that a proportion of a quantity of times that the plurality of first adjustment values of the first parameter exceed the target adjustment value upper limit to a total quantity of training times is greater than a preset value (the preset value may be, for example, set based on experience). For example, it is assumed that the server 102 determines, through statistics collection over 5000 rounds of iterative training at the first training phase, that the quantity of times that the first adjustment value of the first parameter that is calculated by the optimizer exceeds the adjustment upper limit is 1500 (the target adjustment value upper limit in the iteration process may remain unchanged, or may gradually decrease), and it is assumed that the preset value is 0.2. In this case, the server 102 determines, through calculation, that a proportion that the first adjustment value of the first parameter exceeds the target adjustment value upper limit over iterative training is 0.3 (that is 1500/5000), and the proportion is greater than the preset value 0.2. The server 102 may determine that the hyper-parameter set in the optimizer is abnormal, and generate the alarm information to provide a prompt indicating that the hyper-parameter is abnormal. In actual application, if the proportion that the first adjustment value of the first parameter exceeds the adjustment upper limit does not exceed the preset value, the server 102 may consider by default that the hyper-parameter set in the optimizer is normal.

In another embodiment, the preset condition that the plurality of adjustment values of the first parameter meet may alternatively be implemented in another manner. This is not limited in this embodiment. For example, the server 102 may alternatively monitor a quantity of times that the first adjustment value of the first parameter continuously exceeds the adjustment upper limit. When the quantity of times is greater than a preset threshold of times, the server 102 may determine that the hyper-parameter in the optimizer is abnormal. When the quantity of times is less than or equal to a preset threshold of times, the server 102 determines that the hyper-parameter in the optimizer is normal.

In actual application, in the process of training the deep learning model, the server 102 may determine the adjustment upper limit by using the N third adjustment values collected at the foregoing second training phase. In another possible implementation, the server 102 may alternatively obtain, locally or from a cloud, the adjustment upper limit used to limit the adjustment value of the first parameter.

For example, in an application scenario shown in FIG. 6, the server 102 may locally construct a local database in advance, and the local database may store an adjustment upper limit of the first parameter that is used for training one or more different deep learning models. For example, each time the server 102 trains a deep learning model, the server 102 may store, in the local database, an adjustment value of a first parameter that is used for training the deep learning model, so that the server 102 can obtain, from the local database when training a next deep learning model, an adjustment upper limit of a corresponding parameter.

Further, the server 102 may further determine a specific value of a target adjustment value upper limit based on a feature of a hardware resource used for training the deep learning model. Specifically, the server 102 may include a plurality of chips of different types, and the server 102 may train different deep learning models by using the chips of different types. For example, in a past time period, the server 102 trains a deep learning model 1 by using a chip of a first type, where the chip of the first type may support, for example, a data format of a floating point (floating point, FP) 16, that is, each value is represented by using 16 bits (bits); and stores, in a local database, an adjustment upper limit represented by 16 bits and used for training the deep learning model 1. In addition, the server 102 further trains a deep learning model 2 by using a chip of a second type, where the chip of the first type may support, for example, a data format of FP32, that is, each value is represented by using 32 bits (bits); and stores, in the local database, an adjustment upper limit represented by 32 bits and used for training the deep learning model. In this case, when the server 102 selects the chip of the first type again to train a next deep learning model 3, the server 102 may find, from the local database, the adjustment upper limit used for training the deep learning model 1 by using the chip of the first type, and may limit, by using the adjustment upper limit, an adjustment value of a corresponding parameter in a process of training the deep learning model 3.

Alternatively, the server 102 may obtain, from a cloud database an adjustment upper limit used to limit the adjustment value of the first parameter. As shown in FIG. 6, the server 102 may share a same cloud database with a plurality of servers such as a server 103 and a server 104. In addition, the server 103 may train the deep learning model 1 by using the chip of the first type, and the server 104 may train the deep learning model 2 by using the chip of the second type. In addition, the server 103 and the server 104 may upload, to the cloud database, an adjustment value of a parameter that is used for training the deep learning model. In this way, when the server 102 trains the deep learning model 3 by using the chip of the first type, the server 102 may access the cloud database, to obtain an adjustment upper limit used when the server 103 trains the deep learning model 1 by using the chip of the first type. Therefore, the server 102 may limit, by using the obtained adjustment upper limit, the adjustment value of the corresponding parameter in the process of training the deep learning model 3, to accelerate convergence of the deep learning model 3. In actual application, after the server 102 completes training of the deep learning model, the adjustment upper limit used for training the deep learning model may be uploaded to the cloud database, so that another server trains a deep learning model by using the adjustment upper limit uploaded by the server 102. This is not limited in this embodiment.

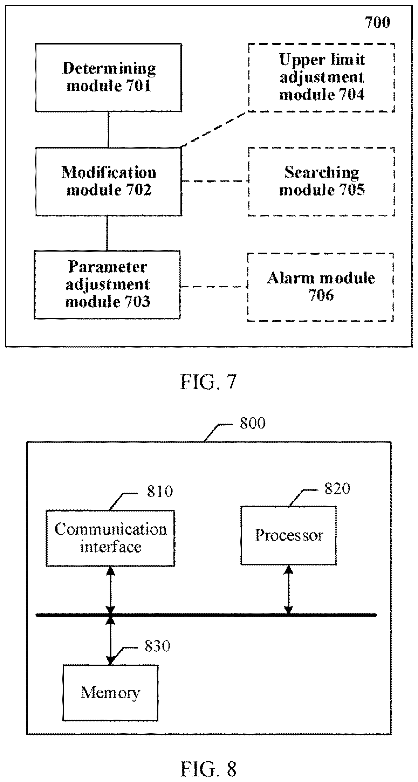

The foregoing describes in detail the deep learning model training method provided in this application with reference to FIG. 1 to FIG. 6. The following describes an apparatus and a computing device provided in this application with reference to FIG. 7 to FIG. 8.

Based on a same inventive concept as the foregoing method, an embodiment of this application further provides a deep learning model training apparatus. The deep learning model training apparatus may implement a function of the server 102 in the embodiment shown in FIG. 3, to implement training of a deep learning model. The deep learning model includes a plurality of layers, and each layer includes at least one parameter. With reference to FIG. 7, the deep learning model training apparatus 700 may include:
a determining module 701, configured to: after reverse calculation is performed at a first training phase of the deep learning model, determine a first adjustment value of a first parameter, and determine whether the first adjustment value exceeds an adjustment upper limit of the first parameter;
a modification module 702, configured to: when the first adjustment value exceeds the adjustment upper limit of the first parameter, modify the first adjustment value to a second adjustment value, where the second adjustment value is less than or equal to the adjustment upper limit; and
a parameter adjustment module 703, configured to adjust the first parameter based on the second adjustment value, where a first layer is one of the plurality of layers, and the first parameter is one of the at least one parameter.

In a possible implementation, the deep learning model training apparatus 700 further includes:
an upper limit adjustment module 704, configured to adjust the adjustment upper limit based on the second adjustment value.

In a possible implementation, before the first training phase of the deep learning model, the deep learning model further has a second training phase, and the determining module 701 is further configured to:
determine, at the second training phase based on a result of forward calculation of the deep learning model, a loss value corresponding to the first parameter;
determine a third adjustment value based on the loss value corresponding to the first parameter and a hyper-parameter corresponding to the deep learning model; and
after the deep learning model is trained for N times, determine the adjustment upper limit based on N third adjustment values obtained through the N times of training.

In a possible implementation, a hyper-parameter at the first training phase is greater than a hyper-parameter at the second phase.

In a possible implementation, the adjustment upper limit is a preset value.

In a possible implementation, the deep learning model is trained based on a chip of a first type, and the deep learning model training apparatus 700 further includes:
a searching module 705, configured to find an adjustment upper limit corresponding to the chip of the first type from adjustment upper limits respectively corresponding to chips of a plurality of types included in a cloud database.

In a possible implementation, the modification module 702 is configured to multiply the first adjustment value by a modification value to obtain the second adjustment value.

In a possible implementation, the first adjustment value is determined based on the loss value obtained through the forward calculation of the deep learning model and the hyper-parameter corresponding to the deep learning model.

The deep learning model training apparatus 700 further includes:
an alarm module 706, configured to: generate alarm information when a proportion of the quantity of times that the first adjustment value exceeds the adjustment upper limit to a total quantity of training times exceeds a preset value after the deep learning model is trained for a plurality of times at the first training phase.

The deep learning model training apparatus 700 in this embodiment corresponds to the deep learning model training method shown in FIG. 3. Therefore, for specific implementation of each functional module in the deep learning model training apparatus 700 in this embodiment and technical effects thereof, refer to related descriptions in the embodiment shown in FIG. 3. Details are not described herein again.

In addition, an embodiment of this application further provides a computing device. As shown in FIG. 8, the computing device 800 may include a communication interface 810 and a processor 820. Optionally, the computing device 800 may further include a memory 830. The memory 830 may be disposed inside the computing device 800, or may be disposed outside the computing device 800. For example, all actions in the embodiment shown in FIG. 3 may be implemented by the processor 820. The processor 820 may obtain a deep learning model, a training dataset, configuration information, and the like provided by a client 101 through the communication interface 810, and is configured to implement any method performed in FIG. 3. In an implementation process, steps of the processing procedure may be performed by using an integrated logic circuit of hardware in the processor 820 or instructions in a form of software to complete the method performed in FIG. 3. For brevity, details are not described herein again. Program code executed by the processor 820 to implement the foregoing method may be stored in the memory 830. The memory 830 is connected to the processor 820, for example, in a coupled connection manner.

Some features of embodiments of this application may be implemented/supported by the processor 820 executing program instructions or software code in the memory 830. A software component loaded on the memory 830 may be summarized in terms of function or logic, for example, the determining module 701, the modification module 702, the parameter adjustment module 703, the upper limit adjustment module 704, and the alarm module 706 shown in FIG. 7. A function of the searching module 705 may be implemented by the communication interface 810.

Any communication interface in embodiments of this application may be a circuit, a bus, a transceiver, or any other apparatus that can be configured to exchange information, for example, the communication interface 810 in the computing device 800. For example, the any other apparatus may be a device connected to the computing device 800.

The processor in embodiments of this application may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed and completed by a hardware processor, or may be performed and completed by using a combination of hardware in the processor and a software module.

Couplings in embodiments of this application are indirect couplings or communication connections between apparatuses, modules, or modules, may be in an electrical, mechanical, or another form, and are used for information exchange between the apparatuses, modules, or modules.

The processor may operate in collaboration with the memory. The memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of an instruction structure or a data structure and that can be accessed by a computer, but is not limited thereto.

A specific connection medium between the communication interface, the processor, and the memory is not limited in embodiments of this application. For example, the memory, the processor, and the communication interface may be connected to each other through a bus. The bus may be classified into an address bus, a data bus, a control bus, and the like.

Based on the foregoing embodiments, an embodiment of this application further provides a computer storage medium. The storage medium stores a software program. When the software program is read and executed by one or more processors, the method performed by the server 102 provided in any one or more of the foregoing embodiments may be implemented. The foregoing computer storage medium includes any medium that can store program code, such as a USB flash drive, a removable hard disk, a read-only memory, a random access memory, a magnetic disk, or an optical disc.

Based on the foregoing embodiments, an embodiment of this application further provides a chip. The chip includes a processor, configured to implement a function of the server 102 in the foregoing embodiments, for example, configured to implement the method performed in FIG. 3. Optionally, the chip further includes a memory, and the memory is configured to store necessary program instructions and data executed by the processor. The chip may include a chip, or may include a chip and another discrete device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowchart and/or block diagram of the method, the device (system), and the computer program product according to embodiments of this application. It should be understood that computer program instructions may be used to implement each procedure and/or each block in the flowchart and/or the block diagram, and a combination of a procedure and/or a block in the flowchart and/or the block diagram. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowchart and/or in one or more blocks in the block diagram.

The computer program instructions may alternatively be stored in a computer-readable memory that can guide a computer or another programmable data processing device to work in a specific manner, so that the instructions stored in the computer-readable memory generate an artifact that includes an instruction apparatus. The instruction apparatus implements a specific function in one or more procedures in the flowchart and/or one or more blocks in the block diagram.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowchart and/or one or more blocks in the block diagram.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects with a same attribute are described in embodiments of this application.

Apparently, a person skilled in the art may make various modifications and variations to embodiments of this application without departing from the scope of embodiments of this application. In this way, this application is intended to cover these modifications and variations of embodiments of this application provided that they fall within the scope of the claims of this application and equivalent technologies thereof.

## Claims

1. A deep learning model training method, wherein a deep learning model comprises a plurality of layers, each layer comprises at least one parameter, and the method comprises:
after performing reverse calculation at a first training phase of the deep learning model, adjusting a first parameter of a first layer of the plurality of layers, comprising:
determining a first adjustment value of the first parameter;
determining whether the first adjustment value exceeds an adjustment upper limit of the first parameter;
when the first adjustment value exceeds the adjustment upper limit of the first parameter, modifying the first adjustment value to a second adjustment value, wherein the second adjustment value is less than or equal to the adjustment upper limit; and
adjusting the first parameter based on the second adjustment value, wherein the first layer is one of the plurality of layers, and the first parameter is one of the at least one parameter.

2. The method according to claim 1, wherein the method further comprises:
adjusting the adjustment upper limit based on the second adjustment value.

3. The method according to claim 1 or 2, wherein before the first training phase of the deep learning model, the deep learning model further has a second training phase, and at the second training phase, the method further comprises:
determining, based on a result of forward calculation of the deep learning model, a loss value corresponding to the first parameter;
determining a third adjustment value based on the loss value corresponding to the first parameter and a hyper-parameter corresponding to the deep learning model; and
after the deep learning model is trained for N times, determining the adjustment upper limit based on N third adjustment values obtained through the N times of training.

4. The method according to claim 3, wherein a value of a hyper-parameter at the first training phase is greater than a value of a hyper-parameter at the second phase.

5. The method according to claim 1 or 2, wherein the adjustment upper limit is a preset value.

6. The method according to claim 5, wherein the deep learning model is trained based on a chip of a first type, and the method further comprises:
finding an adjustment upper limit corresponding to the chip of the first type from adjustment upper limits respectively corresponding to chips of a plurality of types comprised in a cloud database.

7. The method according to any one of claims 1 to 6, wherein the modifying the first adjustment value to a second adjustment value comprises:
multiplying the first adjustment value by a modification value to obtain the second adjustment value.

8. The method according to any one of claims 1 to 7, wherein the first adjustment value is determined based on the loss value obtained through the forward calculation of the deep learning model and the hyper-parameter corresponding to the deep learning model; and
the method further comprises:
generating alarm information when a proportion of a quantity of times that the first adjustment value exceeds the adjustment upper limit to a total quantity of training times exceeds a preset value after the deep learning model is trained for a plurality of times at the first training phase.

9. A deep learning model training apparatus, wherein a deep learning model comprises a plurality of layers, each layer comprises at least one parameter, and the apparatus comprises:
a determining module, configured to: after reverse calculation is performed at a first training phase of the deep learning model, determine a first adjustment value of a first parameter, and determine whether the first adjustment value exceeds an adjustment upper limit of the first parameter;
a modification module, configured to: when the first adjustment value exceeds the adjustment upper limit of the first parameter, modify the first adjustment value to a second adjustment value, wherein the second adjustment value is less than or equal to the adjustment upper limit; and
a parameter adjustment module, configured to adjust the first parameter based on the second adjustment value, wherein the first layer is one of the plurality of layers, and the first parameter is one of the at least one parameter.

10. The apparatus according to claim 9, wherein the apparatus further comprises:
an upper limit adjustment module, configured to adjust the adjustment upper limit based on the second adjustment value.

11. The apparatus according to claim 9 or 10, wherein before the first training phase of the deep learning model, the deep learning model further has a second training phase, and the determining module is further configured to:
determine, at the second training phase based on a result of forward calculation of the deep learning model, a loss value corresponding to the first parameter;
determine a third adjustment value based on the loss value corresponding to the first parameter and a hyper-parameter corresponding to the deep learning model; and
after the deep learning model is trained for N times, determine the adjustment upper limit based on N third adjustment values obtained through the N times of training.

12. The apparatus according to claim 11, wherein a hyper-parameter at the first training phase is greater than a hyper-parameter at the second phase.

13. The apparatus according to claim 9 or 10, wherein the adjustment upper limit is a preset value.

14. The apparatus according to claim 13, wherein the deep learning model is trained based on a chip of a first type, and the apparatus further comprises:
a searching module, configured to find an adjustment upper limit corresponding to the chip of the first type from adjustment upper limits respectively corresponding to chips of a plurality of types comprised in a cloud database.

15. The apparatus according to any one of claims 9 to 14, wherein the modification module is configured to multiply the first adjustment value by a modification value to obtain the second adjustment value.

16. The apparatus according to any one of claims 9 to 15, wherein the first adjustment value is determined based on the loss value obtained through the forward calculation of the deep learning model and the hyper-parameter corresponding to the deep learning model; and
the apparatus further comprises:
an alarm module, configured to generate alarm information when a proportion of a quantity of times that the first adjustment value exceeds the adjustment upper limit to a total quantity of training times exceeds a preset value after the deep learning model is trained for a plurality of times at the first training phase.

17. A device, wherein the device comprises a processor and a memory, and
the processor is configured to execute instructions stored in the memory, to enable the device to perform the method according to any one of claims 1 to 8.

18. A computer-readable storage medium, comprising instructions, wherein the instructions are used for implementing the method according to any one of claims 1 to 8.

19. A computer program product comprising instructions, wherein when the computer program product runs on a computing device, the computing device is enabled to perform the method according to any one of claims 1 to 8.
